# EUROPÄISCHE PATENTSCHRIFT

(11) **EP 1 194 782 B1**
(45) Veröffentlichungstag und Bekanntmachung des Hinweises auf die Patenterteilung: **23.03.2005**
(21) Anmeldenummer: 00945892.8
(22) Anmeldetag: 07.07.2000
(51) Int. Cl.: G01P 3/44, G01P 3/487, B60T 8/32, B60K 7/00, B60K 17/04

(54) **SENSOR ZUR ERFASSUNG DER DREHZAHL EINES RADES**
SENSOR FOR MEASURING THE NUMBER OF REVOLUTIONS OF A WHEEL
CAPTEUR POUR DETECTER LA VITESSE DE ROTATION D'UNE ROUE

(30) Priorität: 13.07.1999 DE 19932585
(43) Veröffentlichungstag der Anmeldung: 10.04.2002
(73) Patentinhaber: ZF FRIEDRICHSHAFEN Aktiengesellschaft, 88038 Friedrichshafen (DE)
(72) Erfinder: WENDL, Harald, D-94474 Vilshofen (DE); BACHMANN, Max, D-88339 Bad Waldsee (DE)
(86) Internationale Anmeldenummer: PCT/EP2000/006440
(87) Internationale Veröffentlichungsnummer: WO 2001/004637

(56) Entgegenhaltungen:
- US-A- 5 053 656
- PATENT ABSTRACTS OF JAPAN vol. 016, no. 311 (M-1277), 8. Juli 1992 (1992-07-08) -& JP 04 087865 A (HINO MOTORS LTD), 19. März 1992 (1992-03-19)

## Beschreibung

Die Erfindung betrifft einen Sensor zur Erfassung der Drehzahl eines Rades nach der im Oberbegriff von Anspruch 1 näher definierten Art.

Sensoren zur Erfassung der Drehzahl eines Rades werden häufig in Kraftfahrzeugen eingesetzt, um ein Drehzahlsignal an ein Steuergerät zu liefern, welches z. B. ein Anti-Blockier-System einer Bremseinrichtung ansteuert.

Die DE 25 42 917 C2 offenbart einen Sensor zur Erfassung der Drehzahl eines Rades, welcher an einem feststehenden Nabenträger befestigt ist und sich innerhalb einer Scheibenbremse befindet. Soll das Rad z. B. durch einen Radantrieb angetrieben werden, bei welchem der Antriebsmotor, um ihn in seinen Abmessungen gering ausführen zu können, das Rad über ein Untersetzungsgetriebe antreibt, so wird der Bauraum innerhalb der Scheibenbremse benötigt, um das Untersetzungsgetriebe und den Antriebsmotor anzuordnen.

Aus der JP-A-04 087 865 ist ein Sensor zur Erfassung einer Drehzahl bekannt, der zwischen einer Anflanschfläche der Felge und einer Bremsscheibe angeordnet ist, welcher die Drehzahl über einen Bügel parallel zur Raddrehachse erfaßt, indem er ein Signal von einem Signalrad abgreift.

In der US-A-5,053,656 ist ein Sensor zur Erfassung der Drehzahl eines Rades beschrieben, welcher zwischen einer Anflanschfläche der Felge und einer Bremsscheibe angeordnet ist.

Die aus dem Stand der Technik bekannten Sensoren zur Erfassung einer Drehzahl weisen den Nachteil auf, dass sich die Signale aufgrund äußerer Einflüsse, wie beispielsweise Wärme oder Schmutz, durch einen sich ändemden Abstand des Sensors zum Signalrrad ändern und die Drehzahl somit nicht korrekt erfaßt wird.

Der vorliegenden Erfindung liegt die Aufgabe zugrunde, einen Sensor zur Erfassung der Drehzahl eines Rades innerhalb eines Rades, welches von einem Antriebsmotor und einem nachgeschalteten Untersetzungsgetriebe angetrieben wird, so anzuordnen, daß der Radantrieb kompakt ausgeführt werden kann.

Die Aufgabe wird mit einem, auch die kennzeichnenden Merkmale des Hauptanspruchs aufweisenden, gattungsgemäßen Sensor gelöst.

Erfindungsgemäß wird der Sensor zur Erfassung der Drehzahl eines Rades zwischen der Anflanschfläche einer Felge und einer Bremsscheibe einer Scheibenbremse angeordnet. Hierbei wird ein Polrad auf der mit der Felge verbundenen Nabe angeordnet und der Sensor an einem Bügel, welcher die Bremsscheibe umschließt und an einem feststehenden Nabenträger befestigt ist, angebracht. Der Bügel ist vorzugsweise als U-Profil ausgeführt, um in seinem Hohlraum die Steuerleitungen zur Übertragung des Drehzahlsignals an ein Steuergerät aufzunehmen. Da bei Betätigung der Betätigungseinrichtung der Bremse Reibungswärme entsteht und der Bügel die Bremsscheibe umschließt und unmittelbar im Wirkungsbereich der Wärmequelle angeordnet ist, sind entweder der Bügel oder die Steuerleitung und/oder die Befestigung des Sensors im Bügel und/oder die Befestigung der Steuerleitungen im Bügel aus einem gering wärmeleitenden Material auszuführen. Vorzugsweise ist der Bügel im unteren Bereich der Felge angeordnet, da entstehende Wärme nach oben strömt. Eine weitere Möglichkeit, den Sensor zur Erfassung der Drehzahl eines Rades zwischen der Anflanschfläche einer Felge und einer Bremsscheibe anzuordnen, ist es, den Sensor an der Betätigungseinrichtung der Scheibenbremse zu befestigen. Pneumatisch betätigte Bremsen haben vorzugsweise einen Schwimmsattel, welcher die Bremsscheibe umschließt. Der Schwimmsattel weist Aufnahmen für die Steuerleitungen des Sensors auf, in welchen entweder temperaturbeständige Steuerleitungen oder Steuerleitungen temperaturgeschützt angeordnet sein können. Da der Schwimmsattel sich bei Belagverschleiß in axialer Richtung bewegt, ist die Breite des Polrades so auszulegen, daß der Sensor bei unverschlissenem Belag und bei einem verschlissenem Belag das Drehsignal abgreifen kann. Es ist auch möglich, den Sensor am feststehenden Bremsträger anzubringen, indem ein z. B. zusätzlicher Anguß mit Aufnahmebohrung angebracht wird. Indem der Antriebsmotor einen Achsversatz zur Radachse aufweist und das Gehäuse des Antriebsmotors die Radkräfte überträgt, ist es möglich, die Bremse innerhalb der Felge anzuordnen. Der Sensor zur Erfassung der Drehzahl eines Rades ist vorzugsweise dergestalt im Rad angeordnet, daß die Steuerleitungen eine nach unten geneigte Richtung aufweisen, um die Wärmeeinwirkung zu verringern und um evtl. anfallenden Schmutz und Feuchtigkeit nicht entlang der Steuerleitungen in den Sensor gelangen zu lassen. Indem der Sensor zur Erfassung der Drehzahl eines Rades in dem Zwischenraum zwischen Anflanschfläche einer Felge und einer Bremsscheibe angeordnet ist, ist es möglich, das Untersetzungsgetriebe und einen großen Teil des Antriebsmotors sowie die Bremsscheibe und deren Betätigungseinrichtung innerhalb einer Felge anzuordnen.

Weitere Ausgestaltungsmerkmale sind der Figuren-Beschreibung zu entnehmen.

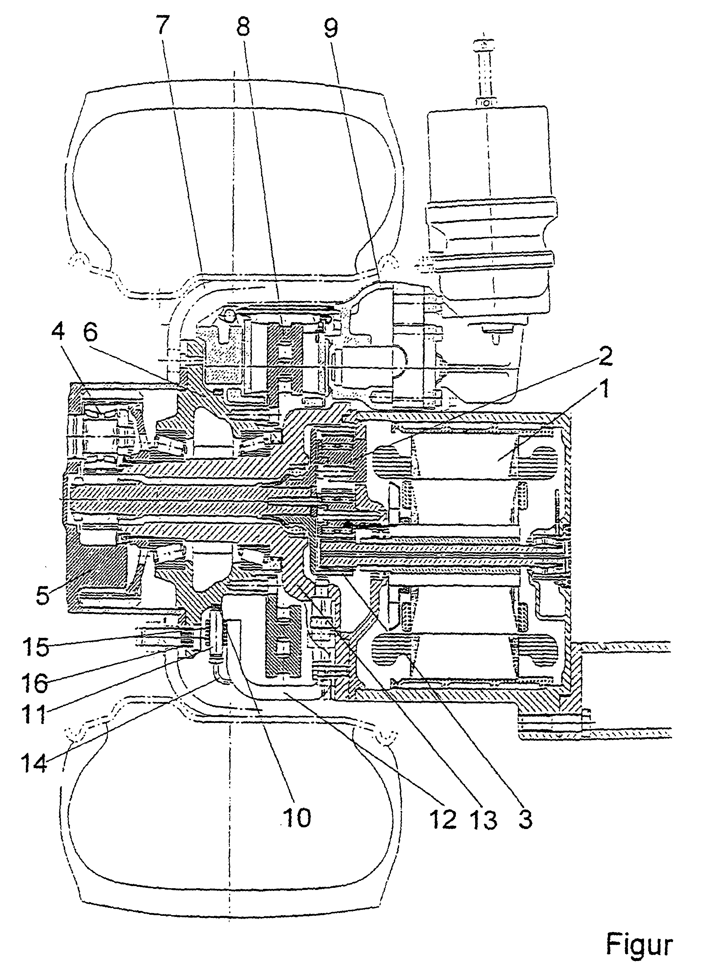

Die einzige Figur zeigt einen Radantrieb, bei welchem ein Antriebsmotor 1, welcher als elektrischer oder hydraulischer Antriebsmotor ausgeführt sein kann, ein Untersetzungsgetriebe 2 antreibt, dessen Hohlrad 3 ein zweites Untersetzungsgetriebe 4 antreibt, dessen Planetenträger 5 mit einer Nabe 6 verbunden ist, an welcher eine Felge 7 drehfest gehaltert ist. Die Nabe 6 ist mit einer Bremsscheibe 8 drehfest verbunden, bei welcher beim Betätigen der Betätigungseinrichtung 9 die Felge 7 abgebremst wird. Auf der Nabe 6 ist ein Polrad 10 angeordnet, welches bei Drehung der Nabe 6 mit dem Sensor 11 Drehzahlsignale ausgibt. Der Sensor 11 ist mit Hilfe eines Bügels 12 an einem drehfest gehaltenen Nabenträger 13 befestigt. Der Bügel 12 umschließt die Bremsscheibe 8 und ist vorzugsweise als U-förmiges Profil ausgestaltet, um die Steuerleitung 14 aufzunehmen und die nötige Steifigkeit zu gewährleisten. Die Steuerleitung 14 ist einerseits mit dem Sensor 11 und andererseits mit einer nicht dargestellten elektronischen Steuereinrichtung verbunden. Der Sensor 11 ist über eine Buchse 15 in dem Bügel 12 gehalten, da die Buchse 15 eine Klemmkraft auf den Sensor 11 ausübt. Die Buchse 15 kann auch aus gering wärmeleitendem Material ausgeführt werden. Vorteilhaft ist es, den Bügel oder einen Teil des Bügels aus gering wärmeleitendem Material auszuführen. Indem der Sensor 11 zwischen der Anflanschfläche 16 der Felge 7 und der Bremsscheibe 8 angeordnet ist, ist es möglich, die Bremsscheibe 8, den größten Teil der Betätigungseinrichtung 9 sowie das Untersetzungsgetriebe 2 und einen Teil des Antriebsmotors 1 innerhalb der Felge 7 unterzubringen.

### Bezugszeichen

- 1: Antriebsmotor
- 2: Untersetzungsgetriebe
- 3: Hohlrad
- 4: Untersetzungsgetriebe
- 5: Planetenträger
- 6: Nabe
- 7: Felge
- 8: Bremsscheibe
- 9: Betätigungseinrichtung
- 10: Polrad
- 11: Sensor
- 12: Bügel
- 13: Nabenträger
- 14: Steuerleitung
- 15: Buchse
- 16: Anflanschfläche

## Patentansprüche

1. Sensor (11) zur Erfassung der Drehzahl eines Rades, welches mittels eines Antriebsmotors (1) über ein Untersetzungsgetriebe (2) angetrieben wird und mittels einer Scheibenbremse mit einer Bremsscheibe (8) abbremsbar ist, wobei die Scheibenbremse weitgehend innerhalb einer Felge (7) angeordnet ist, und der Sensor (11) zwischen einer Anflanschfläche (16) der Felge (7) und einer Bremsscheibe (8) angeordnet ist, **dadurch gekennzeichnet, dass** der Sensor (11) an einem Teil der Scheibenbremse befestigt ist, ein Signalrad (10) in seiner axialen Erstreckung so ausgelegt ist, dass das Signalrad (10) in seiner axialen Erstreckung mindestens so breit ist wie die Bewegung des Sensors (11) in dieser Richtung, um bei unverschlissenem und verschlissenem Belag das Drehsignal sicher abgreifen zu können.

2. Sensor (11) zur Erfassung der Drehzahl eines Rades nach Anspruch 1, **dadurch gekennzeichnet, dass** der Antriebsmotor (1 ) einen Achsabstand zur Radachse aufweist und entgegen des Achsversatzes eine Betätigungseinrichtung (9) der Scheibenbremse angeordnet ist.

3. Sensor (11) zur Erfassung der Drehzahl eines Rades nach Anspruch 1, **dadurch gekennzeichnet, dass** eine Signalleitung (14) vom Sensor (11) zu einem elektronischen Steuergerät aus einem wärmebeständigen Material besteht.

## Claims

1. Sensor (11) for sensing the rpm of a wheel, which by means of a driving engine (1) is driven via a reducing gear (2) and by means of a brake disk (8) of a disk brake can be braked, with the disk brake largely being arranged within a wheel rim (7), and with the sensor (11 ) being arranged between a flange face (16) of the wheel rim (7) and a brake disk (8), **characterized in that** the sensor (11) is fixed to a part of the disk brake and that the axial extension of the signal wheel (10) is designed to match at least the movement of the sensor (11) in this direction, so that with non-worn or worn lining the rotation signal can safely be picked off.

2. Sensor (11) for sensing the rpm of a wheel according to claim 1, **characterized in that** the driving engine (1) is arranged at a distance from the wheel axle and that a control device (9) of the disk brake is arranged opposite to the axle offset.

3. Sensor (11) for sensing the rpm of a wheel according to claim 1, **characterized in that** a signal line (14) leading from the sensor (11) to an ECU consists of a heat-resistant material.

## Revendications

1. Capteur (11) pour la détermination de la vitesse de rotation d'une roue qui est entraînée à l'aide d'un moteur d'entraînement (1) par l'intermédiaire d'une transmission à démultiplication (2) et qui peut être freinée à l'aide d'un frein à disque avec un disque de frein (8), le frein à disque étant disposé à l'intérieur d'une jante (7) et le capteur (11) étant disposé entre une surface de bridage (16) de la jante (7) et un disque de frein (8), **caractérisé en ce que** le capteur (11) est fixé à une partie du frein à disque, une roue de signal (10) est conçue, dans son extension axiale, **en ce que** la roue de signal (10) est, dans son extension axiale, au moins aussi large que le déplacement du capteur (11) dans cette direction, afin de pouvoir capturer le signal de rotation de manière fiable aussi bien lorsque le revêtement n'est pas usé que lorsqu'il est usé.

2. Capteur (11) pour la détermination de la vitesse de rotation selon la revendication 1, **caractérisé en ce que** le moteur d'entraînement (1) présente une distance axiale par rapport à l'axé de la roue et un dispositif d'actionnement (9) du frein à disque est disposé à l'opposé du décalage axial.

3. Capteur (11) pour la détermination de la vitesse de rotation d'une roue selon la revendication 1, **caractérisé en ce qu'**une conduite de signal (14) du capteur (11) vers un dispositif de commande électronique est constituée d'un matériau résistant à la chaleur.
